Europäisches Patentamt

European Patent Office

Office européen des brevets

(11) Publication number: **0 517 237 A2**

# EUROPEAN PATENT APPLICATION

(21) Application number: **92109531.1**

(22) Date of filing: **05.06.92**

(51) Int. Cl.5: **H04H 1/00, H04N 5/60**

(30) Priority: **07.06.91 IT MI911567**

(43) Date of publication of application:
**09.12.92 Bulletin 92/50**

(84) Designated Contracting States:
**AT BE CH DE DK ES FR GB GR LI LU NL SE**

(71) Applicant: **ELETTRONICA INDUSTRIALE S.p.A.**
**Via F. Turati 7**
**I-20036 Lissone (Milano)(IT)**

(72) Inventor: **Riccio, Italo**
**Via U. Foscolo 12**
**20050 Lesmo ( Province of Milano )(IT)**

(74) Representative: **Modiano, Guido et al**
**c/o Modiano & Associati S.r.l. Via Meravigli,**
**16**
**I-20123 Milano(IT)**

(54) **Apparatus for receiving FM stereo radio signals, with associated data subcarrier,broadcast in the VHF and UHF bands in association with a conventional video signal.**

(57) The apparatus for receiving FM stereo radio signals in the VHF and UHF bands broadcast in association with a conventional video signal comprises a demodulation unit which is autonomous and independent of the TV monitor and includes a receiver module which has TV tuner means for the VHF and UHF bands, mixer means, local oscillator means in order to produce a preset intermediate frequency, and a receiver module compatible with conventional FM receivers of the 88-108 MHz band; in said apparatus, the FM radio signal, generated by radio studios, is broadcast by means of the transmission system of an existing television station, is decoded as an independent radio signal in a separate demodulated form, and the signal demodulated from it is "listened to" by means of the TeleRadio receiver according to the invention.

Fig.1

The present invention relates to an apparatus for receiving FM mono and/or stereo radio signals, with related data subcarrier, broadcast in association with a conventional video signal in the VHF and UHF bands with full compatibility with television programs and with absolutely no mutual interference.

Italian patent application No. 212239 A/89 by same Applicant discloses a process for broadcasting and receiving a video signal with which at least two audio signals are associated, one of said audio signals arriving from an FM radio studio, for the separate use and modulation of said one of these audio signals (hereinafter termed "TeleRadio signal") in a conventional radio receiver after appropriate decoding.

The present invention, for a more thorough understanding of which specific reference is made to the above mentioned application, now has the aim of providing an apparatus for receiving said TeleRadio signal which can be configured both in a domestic version, which uses the efficiency of the TV antenna installed on the roof of the building, and in an advanced vehicular version which uses a new antenna; all of these solutions being based on, and having the benefit of, the advantages of the broadcasting process disclosed in above mentioned Italian patent application by same Applicant.

Within this aim, a main object of the invention is to provide an apparatus which is specifically designed for operating not on frequency bands, such as the 88-108 MHz radio band, which are excessively saturated to the point of making it difficult to provide a useful service, but instead uses frequency bands or ranges in which audio and television signals are allocated and which still have a wide margin for utilization.

Yet another object of the invention is to provide an apparatus for receiving telebroadcast signals, which will be hereinafter called "TeleRadio signals", which is furthermore capable of receiving, depending on the user's choice, current stations of the FM band, the audio of all VHF and UHF television channels and at least one further service signal.

Yet another object of the present invention is to provide an apparatus for receiving TeleRadio signals which can be easily included, without substantial economic penalties, in newly manufactured television sets and at the same time can also be associated, with secondary changes, in existing television sets already preset for dual audio.

Yet another object of the present invention is to provide a receiving apparatus which, by utilizing the efficiency of the television antenna installed on the roof of the building, in its domestic version is capable of converting TeleRadio signals onto a preset frequency of the 88-108 MHz band and of retransmitting them locally; in this manner, other conventional receivers located in nearby rooms can receive them with the quality typical of TV audio.

In order to ensure optimum reception of TeleRadio signals even in the vehicular configuration of said receiving apparatus, a further object of the present invention is to provide said TeleRadio signal receiving apparatus with a receiving antenna based on a new concept.

In order to optimize the reception of the apparatus according to the invention, and in particular in its vehicular versions, not least object is to provide said apparatus with an improved tuning process suitable to allow the vehicular receiving apparatus to continue to receive the same selected program in good reception conditions even if the vehicle in which the receiving apparatus is installed moves through a relatively large portion of the served region and passes through areas served on different frequencies.

According to an aspect of the present invention, the above aim and objects, as well as others which will become apparent hereinafter, are achieved by an apparatus for receiving FM stereo radio signals in bands IV and V, with related data subcarrier, broadcast in association with a conventional video signal, which has the characterizing features of the main claim.

Other advantageous configurations of the apparatus and of the process according to the present invention are defined in the sub-claims.

Further characteristics and advantages of the apparatus and of the process for receiving FM stereo radio signals in bands IV and V, with related data subcarrier, broadcast in association with a conventional video signal, will become apparent hereinafter following the detailed descriptions of currently preferred embodiments of said apparatus and its operating process, illustrated only by way of non-limitative example in the accompanying drawings, wherein:

figure 1 is a general block diagram of the currently preferred embodiment of the new TeleRadio receiver according to the invention, in a domestic version;

figure 2 is a schematic view of the receiver of figure 1, connected to the socket of a domestic TV antenna;

figure 3 is a view of the installation of the TeleRadio receiver of the preceding figures, respectively in a multiple system and in a single system; and

figure 4 is a general diagram of the new TeleRadio converter included in the TeleRadio receiver according to the invention.

With reference to the above figures, the main characteristics of the TeleRadio receiver in its different versions, particularly the domestic one and the vehicular one, will be described.

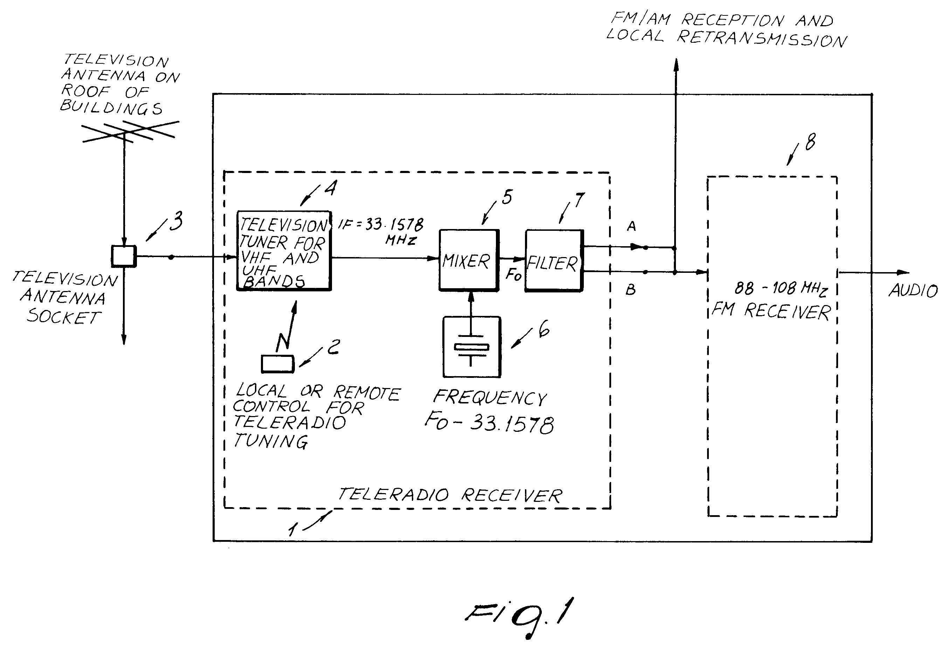

In the block diagram of figure 1, in particular, a domestic version of the TeleRadio receiver has been generally designated by the reference numeral 1.

The signal in input to the TeleRadio receiving apparatus is always derived, in the case of this domestic embodiment which is initially considered here, from a conventional television antenna effectively installed on the roof of the building, by means of a TV socket of the existing TV system, designated by the reference numeral 3.

The TeleRadio receiver substantially comprises a television tuner block for the VHF and UHF bands, designated by 4, and a conventional mixer unit 5 and a filter unit 6 which are circuitally cascade-connected with respect to said tuner block. As can be seen and in a conventional manner, the mixer unit 5 receives at the input thereof the output of a local oscillator 6 which is advantageously suitable to produce a sinusoidal oscillation at a frequency $F_0$ - 33.1578 MHz.

A local or remote control element 2 for the tuning of the TeleRadio apparatus 1 can also be associated with said TeleRadio apparatus as an advantageous completion.

The output of the filter unit 7, schematically indicated by the arrow A, is provided for local retransmission on a frequency $F_0$, whereas the additional output of the filter unit 7, indicated by the arrow B, is provided in order to send the selected TeleRadio signal to the unit 8 on the frequency $F_0$; the unit 8 is also enabled to receive conventional FM signals in the 88-108 MHz band by means of a selector switch.

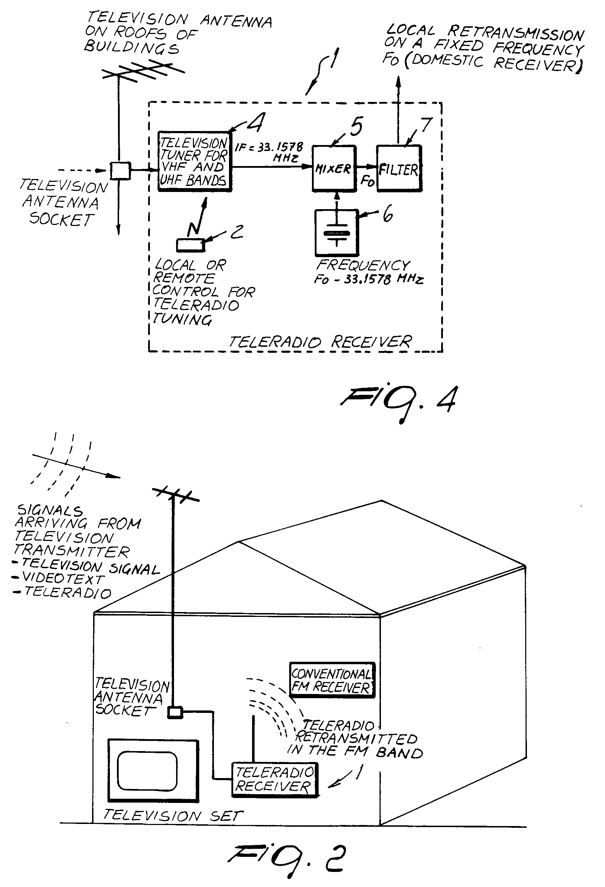

Such a domestic receiver, as shown specifically in figure 2, is always effectively and simply connected to the socket of the domestic TV antenna, which is already available for TV reception; in this manner it is possible to ensure, and this is certainly one of the main peculiarities of the invention, reception of the TeleRadio program on any frequency and with any polarization with the same quality as the audio of the television program, which is notoriously always excellent, broadcast on that same VHF or UHF channel.

As has been seen, the receiver in its domestic version is also capable of converting the TeleRadio signal to an appropriate frequency of the 88-108 MHz band and of retransmitting it locally, so that other conventional domestic receivers located in nearby rooms can receive it with the quality typical of television audio.

This, as is evident, can thus ensure that current receivers can be recovered for use of the new TeleRadio service according to the invention.

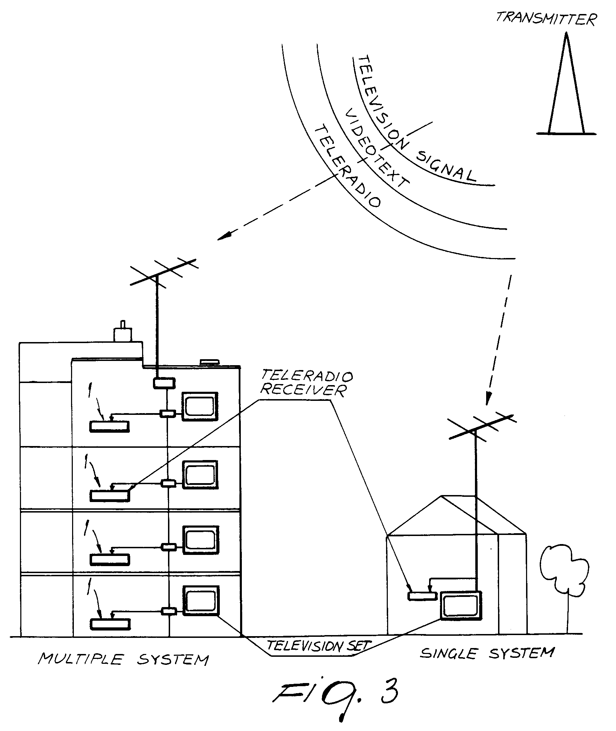

Figure 3 is a view of the apparatus according to the invention, in its above described domestic version, configured in a single system or in a multiple or centralized system.

While waiting for the full diffusion of the new TeleRadio receivers in the above mentioned domestic version, a first simplified and economical version of said domestic receiver can be used to recover old domestic FM receivers by means of a simple converter which is identical to the domestic receiver of figure 1 but does not have the block 8 as in figure 4.

For all purposes, new television sets and those already prepared for dual audio can be considered domestic TeleRadio receivers.

It is sufficient for said television sets to be provided with a switch with three positions which correspond respectively to reception of TeleRadio, reception of television audio (both of these occurring with the TV screen off) and, as third position, normal reception of television programs or of videotext.

According to a further and important aspect of the invention, the apparatus according to said invention can be advantageously configured in a vehicular version which, preferably but non-limitatively, may be designed specifically according to the following characteristics.

In particular, for an optimum application of the TeleRadio apparatus according to the invention in a vehicular reception system one should consider that the TeleRadio signal is present in a very wide band, substantially the entire VHF and UHF range, and arrives from all directions, in the two different polarizations, with predominance of the horizontal one.

Furthermore, the electromagnetic field of the TeleRadio signal, a few meters above the ground, is smaller than the value of said electromagnetic field at the rooftop level, where television antennas are installed, so that in the places where a vehicular TeleRadio receiver passes or is parked there may be shielding effects due to the surrounding natural or artificial obstacles.

In order to solve these problems, according to the invention, a new specifically studied and produced receiver antenna is used; said new antenna, too, is a peculiar aspect of said invention.

For completeness, it is evident that in order to maintain optimum vehicular reception of the selected TeleRadio program, particularly in regions which are shielded and/or at the borders of the served areas, it is sometimes necessary to change station and tune to another isoprogram system having a different frequency.

For this purpose, according to a further important aspect of the invention, a series of coded data, in digital form, related to the name of the broadcast program, is sent to the TeleRadio receiver from the broadcasting system in addition to the requested program.

These data, in particular, broadcast by each broadcasting system together with the TeleRadio signal on a service subcarrier, allow the receiving apparatus according to the invention to automatically tune to the most effective signal regarding the chosen program.

In this manner, a vehicle can move through a wide portion of the area served by a given program, even passing through regions served at different frequencies, constantly remaining able to receive the same chosen program with optimum and continuous reception.

According to a further aspect of the invention, the receiving apparatus can include dedicated memory means for storing appropriate coded data, so as to allow the receiving module included in the device to re-tune to the same program even after any momentary loss of reception, for example in highway tunnels, or after the apparatus has been switched off.

From the above it can be seen that with the apparatus and the process for receiving TeleRadio signals, by virtue of the receiving apparatus and of the broadcasting process according to the present invention (which is an improvement and completion of the above mentioned Italian patent application in the name of the same Applicant), it is possible to broadcast, on a national, regional or local level, as many FM radio programs as there are national, regional or local television networks, in an almost cost-free manner, since the resources used, the frequencies and the financial investments are already "paid" for by the television organization.

Although the receiving apparatus and the improved broadcasting process according to the invention have been specifically described with reference to currently preferred embodiments thereof, one must bear in mind that the described embodiments are susceptible to numerous modifications and variations, all of which are within the scope of the inventive concept defined in the accompanying claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1.  Apparatus for receiving FM stereo radio signals generated by at least one FM radio studio and broadcast in the VHF and UHF bands with a related data subcarrier, in association with a conventional video signal generated by an existing television station, characterized in that it comprises a receiver module including television tuner means for the VHF and UHF bands, mixer means and local oscillator means for producing a preset intermediate frequency, all of said means being circuitly mutually operatively interconnected.

2.  Apparatus according to claim 1, characterized in that said receiver module, in a domestic version thereof, effectively uses, and is compatible with, conventional television antennas.

3.  Apparatus according to claim 1, characterized in that said receiver module, in a vehicular version thereof, is compatible with a vehicular antenna suitable for the VHF and UHF bands, for the conventional FM band II and the MW band.

4.  Apparatus according to any one of the preceding claims, characterized in that it furthermore comprises a remote control-tuning unit suitable to control said receiver module for the remote selection of preset programs.

5.  Apparatus according to any one of the preceding claims, characterized in that said filter means are suitable to convert said stereo radio signals in the VHF and UHF bands to radio signals having a preset frequency in the 88-108 MHz band and to locally retransmit said converted radio signals for monophonic reception with conventional radio receivers.

6.  Receiving antenna structure provided specifically for vehicular reception of stereo radio signals in the VHF-UHF bands, with related data subcarrier, broadcast in association with a conventional video signal and so as to be fully compatible with the receiving module of the vehicular apparatus according to any one of the preceding claims 1 to 5.

7.  Process for optimizing vehicular reception of VHF-UHF stereo radio signals with related data subcarrier broadcast in association with a conventional video signal, characterized in that it includes the step of associating with said radio signals, in addition to a preset program, a series of digitally coded data, said data being univocally correlated to said preset program, being broadcast on a service subcarrier and being suitable to drive said receiver module of the receiving apparatus according to claims 1 to 5 in order to make said receiver module self-tune to said preset program using the most effective signal.

8. Receiving apparatus, according to claims 1 to 5, suitable to receive stereo radio signals in the VHF-UHF bands with related data subcarrier processed by means of the process according to claim 7, characterized in that it comprises memory means which are suitable to store said coded data, said memory means being accessible to said receiver module so as to allow to re-tune to the preset program even after said apparatus has been switched off.

TELEVISION
ANTENNA ON
ROOF OF
BUILDINGS

FM/AM RECEPTION AND
LOCAL RETRANSMISSION

TELEVISION
ANTENNA
SOCKET

3

4 TELEVISION
TUNER FOR
VHF AND
UHF BANDS

IF = 33.1578 MHz

5 MIXER

Fo

7 FILTER

A

B

8

88 - 108 MHz
FM RECEIVER

AUDIO

N 2
LOCAL OR REMOTE
CONTROL FOR
TELERADIO
TUNING

6
FREQUENCY
Fo - 33.1578

TELERADIO RECEIVER

1

Fig.1

EP 0 517 237 A2

TELEVISION ANTENNA ON ROOFS OF BUILDINGS

LOCAL RETRANSMISSION ON A FIXED FREQUENCY F₀ (DOMESTIC RECEIVER)

TELEVISION ANTENNA SOCKET

4 — TELEVISION TUNER FOR VHF AND UHF BANDS

IF = 33.1578 MHz

5 — MIXER — F₀

7 — FILTER

2 — LOCAL OR REMOTE CONTROL FOR TELERADIO TUNING

6 — FREQUENCY F₀ - 33.1578 MHz

TELERADIO RECEIVER

Fig. 4

SIGNALS ARRIVING FROM TELEVISION TRANSMITTER
- TELEVISION SIGNAL
- VIDEOTEXT
- TELERADIO

TELEVISION ANTENNA SOCKET

CONVENTIONAL FM RECEIVER

TELERADIO RETRANSMITTED IN THE FM BAND

TELERADIO RECEIVER 1

TELEVISION SET

Fig. 2

TRANSMITTER

TELEVISION SIGNAL

VIDEOTEXT

TELERADIO

TELERADIO RECEIVER

MULTIPLE SYSTEM

TELEVISION SET

SINGLE SYSTEM

Fig. 3